# FASCICULE DE BREVET EUROPEEN

(11) **EP 1 717 007 B1**
(45) Date de publication et mention de la délivrance du brevet: **08.06.2011**
(21) Numéro de dépôt: 06356050.2
(22) Date de dépôt: 26.04.2006
(51) Int. Cl.: B29C 43/10, B29C 70/44, B29C 49/44, B29C 35/04

(54) **Procédé et installation de moulage par compression de matériaux composites en utilisant un alliage métallique en fusion**
Verfahren und Vorrichtung zum Pressformen von Kunststoff-Verbundwerkstoffen mit Hilfe von geschmolzenen Metalllegierungen
Process and apparatus for compression moulding composites by using metal melt alloy

(30) Priorité: 29.04.2005 FR 0504372
(43) Date de publication de la demande: 02.11.2006
(73) Titulaire: SL Finance et Gestion, 63340 Le Breuil sur Couze (FR)
(72) Inventeur: Mihailovic, Pierre, 63122 Manson (FR)
(74) Mandataire: Bratel, Gérard

(56) Documents cités:
- FR-A- 1 401 173
- FR-A1- 2 596 694
- FR-A1- 2 669 573
- FR-A5- 2 082 503
- US-A- 3 235 637
- US-A- 3 540 708

## Description

La présente invention concerne un procédé de moulage d'une pièce en matériau moulable à chaud, ainsi qu'une installation pour la mise en oeuvre de ce procédé.

L'invention s'applique en particulier aux matériaux composites comprenant une matrice en matériau polymère thermoplastique ou thermodurcissable et des fibres de renfort, et est plus particulièrement destinée à la réalisation de pièces creuses.

De façon connue, les procédés de moulage consistent à imposer au matériau à mouler des conditions précises de température et de pression pendant une durée déterminée. Le matériau à mouler est ainsi porté à une température suffisamment élevée pour, selon les propriétés de ce matériau, lui donner la malléabilité nécessaire à sa conformation ou induire une réaction chimique conduisant à sa solidification irréversible. En outre, l'application d'une pression de maintien impose au matériau la forme souhaitée donnée par le moule.

Dans certaines techniques couramment employées (notamment l'injection et le thermoformage), le matériau est préalablement chauffé en amont puis rapidement introduit dans le moule où il se refroidit en adoptant la forme souhaitée. La faible inertie thermique du matériau permet des temps de transformation très courts conférant à ces techniques une grande productivité. Toutefois, ces techniques ne sont pas adaptées au moulage de matériaux présentant une importante anisotropie, tels que les composites, car le positionnement de ces matériaux dans le moule doit être fait de façon très précise.

D'autres techniques sont donc employées pour le moulage de matériaux anisotropes. Elles consistent à introduire le matériau non chauffé dans le moule puis à chauffer le matériau, celui-ci adoptant alors la forme du moule.

Dans ces techniques, le moule intervient non seulement par sa forme mais également en tant que moyen thermique pour chauffer puis refroidir le matériau. L'inertie thermique importante du moule induite par sa masse nécessaire va alors considérablement augmenter la durée du cycle de transformation, conduisant à une faible productivité. C'est l'une des principales causes du coût élevé des pièces en matériaux composites et de la difficulté de celles-ci à répondre aux impératifs des grandes séries.

Ce problème est d'autant plus important dans le cas des polymères thermoplastiques où la phase indispensable de refroidissement dans le moule rallonge d'autant le temps de séjour du matériau dans le moule, ce temps de séjour pouvant par ailleurs être très court puisqu'il n'est pas dépendant d'une vitesse de polymérisation, comme c'est le cas pour les thermodurcissables. Il est donc particulièrement important de réduire le plus possible la durée de la phase de refroidissement.

Cependant, ce problème peut également se poser dans le cas des polymères thermodurcissables. En effet, si ceux-ci peuvent être démoulés à haute température une fois polymérisés, et la phase de refroidissement dans le moule réduite au minimum, il est néanmoins souhaitable, là aussi, de réduire au maximum cette phase et donc les temps de fabrication.

Plusieurs solutions ont été étudiées pour résoudre ce problème et raccourcir les cycles de fabrication.

Une première solution consiste à réduire la masse du moule tout en augmentant la puissance thermique tant en chauffage qu'en refroidissement. Toutefois cela présente des limites car un moule trop allégé peut venir à se déformer lors de cycles thermiques rapides et répétés. Par ailleurs les sources thermiques, résistances électriques ou canalisations de fluides caloporteurs, demandent une implantation suffisante empêchant de trop diminuer la taille des moules.

Pour cela il est parfois préféré une autre solution, consistant à employer un moule simplifié, ne comportant pas de moyens de chauffage propres et placé successivement entre les plateaux d'une presse chaude et ceux d'une presse froide. Ces plateaux, régulés et présentant une forte inertie thermique, assurent les transferts thermiques nécessaires, des cycles de transformation plus rapides pouvant être ainsi obtenus. Toutefois, cette solution n'est pas optimale car elle nécessite un déplacement important du moule lors de la fabrication, ce qui s'avère contraignant.

Il est également possible de multiplier le nombre de moules utilisés en parallèle, diminuant ainsi le temps de cycles global. Mais l'installation de moulage est alors considérablement plus coûteuse, ce qui n'est pas rentable pour toutes les applications.

Une autre solution a été proposée par le document FR 2 816 237, qui décrit un procédé dans lequel on chauffe non le moule dans son volume mais uniquement sa surface moulante au voisinage immédiat du matériau à mouler. Quant au document WO 03/078141, il prévoit de chauffer directement le matériau par induction ou effet Joule, ce qui n'est possible que pour certains matériaux et certaines formes de pièces.

Si ces techniques sont performantes, elles demandent des mises au point délicates et qui restent spécifiques pour chaque pièce et chaque moule. De plus, le coût des moules et de leurs périphériques peuvent notablement grever la rentabilité globale du procédé.

Enfin, le document EP 1 118 444 prévoit d'immerger le moule dans un bain de métal en fusion, comme l'étain. La conductivité thermique importante du bain associée à sa température élevée permet d'atteindre des montées en température très importantes. Toutefois, ce procédé implique d'importants volumes de métal liquide souvent coûteux. De plus, le métal doit impérativement être maintenu au-dessus de son point de fusion, dans un contexte où les pertes thermiques sont difficilement maîtrisables compte tenu des nécessaires manipulations. En outre, le moule est refroidi par trempe dans un bain liquide, et, entre l'immersion dans le bain de chauffe et le bain de trempe, on laisse le moule atteindre l'équilibre thermique à l'extérieur des bains. Il s'ensuit que, d'une part, le nombre de manipulations nécessaires au cours d'un cycle de fabrication est important et, d'autre part, la durée du cycle est là encore tributaire de l'inertie thermique du moule.

Par ailleurs, le document US 3 235 637 prévoit un moule poreux dans lequel est placée une suspension de particules de polymère, l'ensemble étant disposé dans une chambre à vide. En créant le vide dans la chambre, on forme une couche solide de polymère sur la paroi du moule, puis l'introduction d'un liquide approprié permet le moulage du polymère sous pression et chauffage.

Quant au document FR 1 401 173, il propose de réaliser une forme en T à partir d'une ébauche tubulaire W dans laquelle on introduit un lingot réalisé par exemple en un alliage de plomb et bismuth.

Enfin, le procédé décrit dans le document FR 2 669 573 prévoit de draper des fibres imprégnées de résine autour d'un noyau réalisé en paraffine ou en un alliage métallique et entouré d'une vessie en silicone. L'ensemble est introduit dans un moule disposé dans une enceinte chauffante. Une fois fondue, la matière constituant le noyau est évacuée par un conduit, tandis qu'on introduit de l'air sous pression dans l'espace ainsi formé, en chauffant à la température de polymérisation, pour obtenir une pièce creuse. Là encore, le moule est chauffé.

L'invention vise à remédier aux inconvénients précités en proposant un procédé et une installation de moulage d'un matériau moulable permettant de raccourcir les cycles de fabrication, ne demandant pas de mise au point délicate et s'avérant moins coûteux que les procédés de l'art antérieur.

Un autre objectif de l'invention est de fournir un procédé et une installation de moulage particulièrement adaptés aux pièces creuses, et/ou aux composites à matrice thermoplastique.

A cet effet, l'invention concerne un procédé de moulage d'une pièce en matériau moulable à chaud, comprenant les étapes consistant à :
- prévoir une nappe de matériau moulable à chaud ;
- prévoir un premier alliage métallique dont la température de fusion est inférieure à la température de transformation du matériau moulable ;
- associer contre une face de la nappe une membrane en une matière imperméable au premier alliage métallique, peu isolante thermiquement et qui, à la température de moulage, est déformable mais résistante ;
- placer l'ensemble nappe - membrane dans la cavité d'un moule comprenant au moins un orifice d'entrée, un orifice de sortie et une empreinte, le matériau moulable étant disposé en regard de l'empreinte.

Selon une définition générale de l'invention, le procédé comprend en outre les étapes consistant à :
- introduire le premier alliage métallique sous forme liquide dans le moule par l'orifice d'entrée, dans la partie de la cavité du moule située du même côté de la nappe que la membrane, ledit premier alliage étant porté, dans le moule ou préalablement à son introduction dans le moule, à une température de moulage supérieure à la température de transformation du matériau moulable, et à une pression adaptée, de sorte que l'ensemble nappe - membrane prenne une forme complémentaire de l'empreinte par suite de son placage contre ladite empreinte et de la transformation et de la déformation du matériau moulable sous l'effet du premier alliage métallique ;
- évacuer le premier alliage métallique sous forme liquide hors du moule par l'orifice de sortie ; et
- démouler la pièce obtenue.

Ainsi, l'alliage assure non seulement la mise en forme (en coopération avec l'empreinte du moule), mais également l'amenée du matériau moulable à la température requise pour le moulage. Le moule ne remplissant pas cette fonction, son inertie thermique n'est plus une gêne, et le procédé permet en outre de réaliser des économies substantielles en termes de consommation d'énergie, puisqu'il n'est plus nécessaire de, successivement, chauffer puis refroidir le moule.

Par « température de transformation », on entend :
- pour un polymère thermoplastique, la température de ramollissement, c'est-à-dire la température la plus faible à partir de laquelle le matériau moulable est suffisamment malléable pour pouvoir prendre la forme de l'empreinte ;
- pour un polymère thermoplastique, la température de polymérisation.

Par « déformable mais résistante » on entend qui peut suivre la déformation du matériau sans fondre et sans subir de dégradation du type déchirement.

Il est à noter que l'orifice d'entrée et l'orifice de sortie peuvent être confondus, le moule pouvant alors ne comporter qu'un unique orifice, servant alternativement d'orifice d'entrée et d'orifice de sortie.

L'emploi d'un alliage métallique plutôt qu'un fluide caloporteur classique comme l'huile ou la vapeur offre certains avantages notables quant à la mise en oeuvre. Il présente moins de nuisances lors de sa manipulation qu'une huile et simplifie l'entretien et la maintenance du dispositif, sa tenue thermique et sa longévité sont considérablement supérieures et permet d'atteindre si nécessaire des températures inaccessibles aux huiles thermiques. Contrairement à la vapeur il n'existe pas de corrélation pression/température. Ces deux paramètres, fondamentaux à la qualité de la transformation de la matière, peuvent être ajustés indépendamment.

Selon une réalisation possible, le procédé comprend en outre, après que l'ensemble nappe - membrane a pris une forme complémentaire de l'empreinte et avant le démoulage de la pièce, les étapes consistant à :
- prévoir un deuxième alliage métallique dont la température de fusion est inférieure à la température de transformation du matériau moulable ;
- introduire le deuxième alliage métallique sous forme liquide dans le moule par un orifice d'entrée, dans la partie de la cavité du moule située du même côté de la nappe que la membrane, ledit deuxième alliage étant porté à une température de démoulage comprise entre la température de fusion du deuxième alliage et la température de transformation du matériau moulable, et à une pression adaptée, de sorte à permettre le refroidissement et, le cas échéant, la solidification de l'ensemble nappe - membrane ; et
- évacuer le deuxième alliage métallique sous forme liquide hors du moule par un orifice de sortie.

Ces étapes sont mises en oeuvre notamment pour les matériaux thermoplastiques.

Il est à noter que la température de fusion des premier et deuxième alliages est inférieure à la température de transformation du matériau moulable dans toute la gamme des pressions de travail.

Le moule peut être maintenu à une température sensiblement constante comprise entre la température de fusion du premier et/ou du deuxième alliage métallique et la température de transformation du matériau moulable.

Bien entendu la température du moule peut évoluer au contact du matériau moulable dont la température augmente du fait de la présence du premier alliage. Mais cette évolution de la température est beaucoup plus limitée que dans l'art antérieur, où le moule sert de moyen de chauffage et de refroidissement.

Le premier et/ou le deuxième alliage métallique peut comprendre au moins l'un des composés suivants : plomb, étain, bismuth, cadmium.

Selon une réalisation possible, le premier et le deuxième alliages métalliques présentent des compositions identiques.

La membrane peut être réalisée en un matériau élastomère, tel qu'un élastomère de silicone, ou en un polyamide, et présenter une épaisseur comprise entre 10 µm et 1 mm ; le matériau moulable peut être un matériau composite comprenant une matrice en matériau thermoplastique et des fibres de renfort.

Selon un deuxième aspect, l'invention concerne une installation pour la mise en oeuvre de ce procédé, comprenant un réservoir de base contenant, sous forme liquide, un alliage métallique dont la température de fusion est inférieure à la température de transformation du matériau moulable, un moule dont l'orifice d'entrée est relié par une conduite au réservoir de base, des moyens de chauffage de l'alliage métallique situés en amont du moule ou au niveau du moule et des moyens de déplacement de l'alliage aptes à permettre l'introduction de l'alliage dans le moule et son évacuation hors du moule.

Les moyens de chauffage de l'alliage métallique peuvent être dans un état actif, dans lequel l'alliage métallique liquide présent dans le moule est porté à la température de moulage, ou dans un état inactif, dans lequel l'alliage métallique liquide présent dans le moule n'est pas chauffé et permet le refroidissement de l'ensemble nappe - membrane.

Selon une réalisation possible, le moule est situé au-dessus du réservoir de base, l'orifice de sortie du moule est relié par une conduite à un réservoir annexe situé au-dessus du moule, et les moyens de déplacement de l'alliage comprennent un dispositif de pressurisation apte à augmenter ou diminuer la pression dans le réservoir de base de sorte à provoquer le déplacement ascendant ou descendant de l'alliage métallique liquide dans l'installation.

Pour sa bonne compréhension, l'invention est à nouveau décrite ci-dessous en référence aux figures annexées représentant, à titre d'exemples non limitatifs, plusieurs formes de réalisation possibles de l'invention.
La figure 1 est une vue en perspective d'un premier mode de réalisation d'un tube de matériau composite destiné à être moulé par le procédé de moulage selon l'invention ;
La figure 2 est une vue similaire à la figure 1, illustrant un deuxième mode de réalisation du tube ;
Les figures 3 et 4 représentent schématiquement deux étapes successives du procédé de moulage ;
La figure 5 représente en coupe la pièce tubulaire obtenue à l'issue des étapes des figures 3 et 4 ;
La figure 6 est une vue similaire à la figure 4, dans le cas du moulage d'une pièce sphérique ;
Les figures 7 et 8 sont des représentations schématiques de deux modes de réalisation des moyens de chauffage de l'alliage métallique liquide utilisé ;
La figure 9 est une représentation schématique d'un premier mode de réalisation d'une installation pour la mise en oeuvre du procédé de moulage ;
La figure 10 est une représentation graphique de l'évolution de la différence de pression entre le bas et le haut de l'installation de la figure 9 (traits pleins) et de la pression absolue dans le moule de la figure 9 (pointillés) en fonction du temps, au cours du moulage ;
La figure 11 est une représentation graphique de l'évolution de la température du matériau dans le moule de la figure 9 en fonction du temps, au cours du moulage ;
La figure 12 est une représentation schématique d'un deuxième mode de réalisation d'une installation pour la mise en oeuvre du procédé de moulage ; et
La figure 13 est une représentation schématique d'une variante de réalisation de l'installation concernant la circulation de l'alliage métallique liquide.

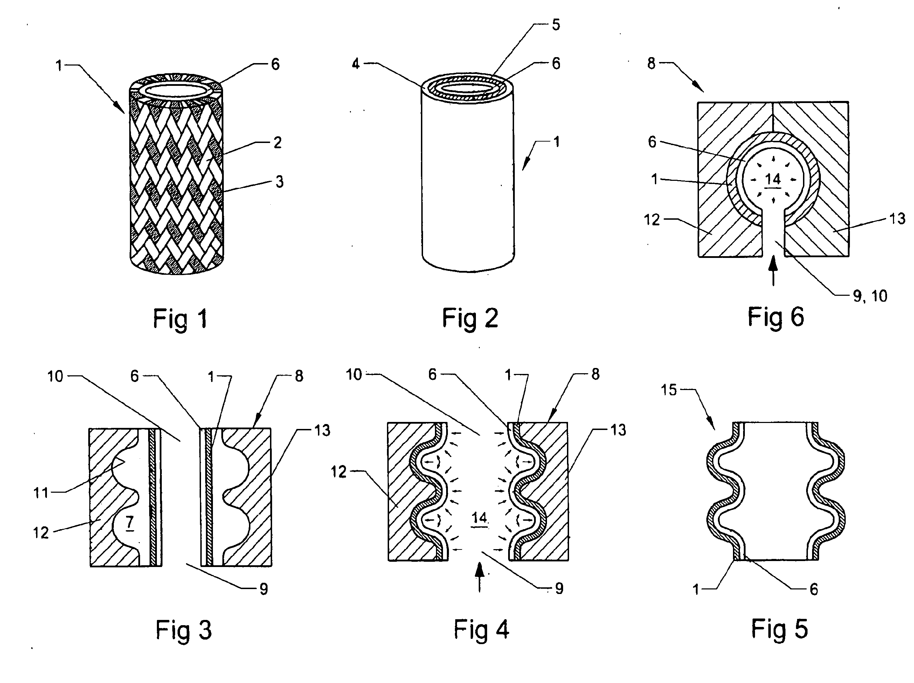

Les figures 1 et 2 représentent chacune un cylindre comprenant une nappe 1 de matériau composite que l'on souhaite mouler pour obtenir une pièce creuse de forme générale tubulaire.

Selon un premier mode de réalisation (figure 1), la nappe 1 comprend des filaments 2 de matière thermoplastique et des filaments 3 de fibres de renfort associés les uns aux autres par tressage, tissage ou juxtaposition et formant une ou plusieurs couches.

Selon un deuxième mode de réalisation (figure 2), la nappe 1 comprend une couche extérieure 4 de matière thermoplastique et une couche intérieure 5 de fibres de renfort placée contre la couche extérieure 4.

Par exemple, la matière thermoplastique est un polyamide, ici le polyamide 12, dont la température de fusion est de 178°C, et les fibres de renfort sont des fibres de carbone. D'autres types de fibres peuvent bien entendu être utilisées (fibres de verre, etc.).

Dans les deux cas, une membrane 6 est disposée contre la face intérieure de la nappe 1. La membrane est déformable, afin de pouvoir suivre la déformation de la nappe 1 lors du moulage, et présente une bonne tenue mécanique à la température de moulage, par exemple entre 200 et 250 °C, afin de ne pas risquer de se déchirer.

La membrane 6 peut être réalisée en un élastomère de silicone, d'une épaisseur comprise entre 0,5 et 1 mm, ou en polyamide 6-6, d'une épaisseur comprise entre 20 et 40 µm.

On décrit maintenant le principe global du procédé de moulage, en référence aux figures 3 à 5.

Tout d'abord, l'ensemble nappe 1 - membrane 6 est introduit dans la cavité 7 d'un moule 8 (figure 3). Le moule 8 comprend un orifice d'entrée 9 et un orifice de sortie 10 communiquant avec la cavité 7 ainsi qu'une empreinte 11. Le moule 8 est ici réalisé en deux parties 12, 13 mais d'autres configurations sont possibles. L'ensemble nappe 1 - membrane 6 est disposé de sorte qu'une première ouverture du cylindre soit située près de l'orifice d'entrée 9 du moule 8 et raccordée à celui-ci de façon étanche, et qu'une deuxième ouverture du cylindre soit située près de l'orifice de sortie 10 et raccordée à celui-ci de façon étanche. De plus, la membrane 6 est située à l'intérieur du cylindre, tandis que la nappe 1 est disposée en regard de l'empreinte 11.

Ensuite, un alliage métallique liquide 14 est introduit dans la cavité 7 du moule 8 par l'orifice d'entrée 9 (figure 4). L'alliage 14 pénètre ainsi à l'intérieur du cylindre, mais pas entre le cylindre et l'empreinte 11. L'alliage 14 est porté à une température supérieure à la température de ramollissement voire de fusion de la matière thermoplastique de la nappe 1, et à une pression suffisante, provoquant ainsi le ramollissement ou la fonte de la matière thermoplastique, la déformation de la nappe 1 et son placage contre l'empreinte 11 du moule 8. La pression de l'alliage 14 permet non seulement la mise en forme mais également l'obtention d'une paroi d'épaisseur uniforme. Dans le cas d'un cylindre conforme au deuxième mode de réalisation, lorsque la couche extérieure 4 de matière thermoplastique fond, elle enrobe les fibres de la couche intérieure 5 pour former une unique couche de composite à matrice thermoplastique et pourvu de fibres.

Au cours de cette étape de moulage, la membrane 6 suit la déformation de la nappe 1 sans subir de déchirure. La membrane 6 isole la nappe 1 en évitant, le cas échéant, tout épanchement de l'alliage 14 vers la nappe 1, mais elle est « peu isolante » thermiquement, c'est-à-dire qu'elle ne constitue pas un frein thermique notable qui empêcherait le ramollissement de la matière thermoplastique.

On évacue alors hors du moule 8, par l'orifice de sortie 10, l'alliage ayant permis le moulage, puis on procède au refroidissement et donc à la solidification de la nappe 1, grâce à l'introduction dans le moule 8 du même alliage, porté cette fois à une température inférieure à la température de ramollissement de la matière thermoplastique, l'alliage étant toujours liquide.

Enfin, après solidification de la nappe 1 et évacuation de l'alliage, on procède au démoulage, et l'on obtient la pièce 15 représentée sur la figure 5. Sur la pièce 15 obtenue, la membrane 6 est disposée contre la face intérieure de la nappe 1. Il est alors souhaitable de l'en détacher, par simple traction. Lorsque la membrane 6 est réalisée en un matériau résistant, elle peut être ôtée sans être déchirée, et ainsi être réutilisée pour le moulage d'une autre pièce. Dans le cas où la membrane 6 est réalisée en un matériau plus fragile, elle peut être déchirée lors de son retrait. Dans certains cas également, il est difficile voire impossible de retirer la membrane 6. Celle-ci reste alors solidaire de la pièce 15.

Bien entendu, l'invention n'est pas limitée à la réalisation de pièces tubulaires, mais peut également s'appliquer au moulage de pièces creuses de formes quelconques. Sur la figure 6, par exemple, est représentée une étape du procédé conduisant à l'obtention d'une sphère (ou, plus généralement, d'une enveloppe fermée). Dans la réalisation représentée, le moule 8 présente un orifice d'entrée 9 qui joue également le rôle d'orifice de sortie 10.

Le procédé selon l'invention est particulièrement intéressant pour les pièces creuses, pour lesquelles le procédé très simple consistant à chauffer au préalable la nappe par infra rouge n'est pas possible, contrairement aux pièces planes.

L'alliage utilisé est ici un mélange ternaire de plomb, bismuth et étain présentant une température de fusion comprise entre 85 et 105°C, et par exemple de 96°C.

Cet alliage présente une conductivité thermique importante et une capacité calorifique appréciable, ce qui permet d'obtenir des transferts thermiques très rapides et de diminuer d'autant les temps de cycle.

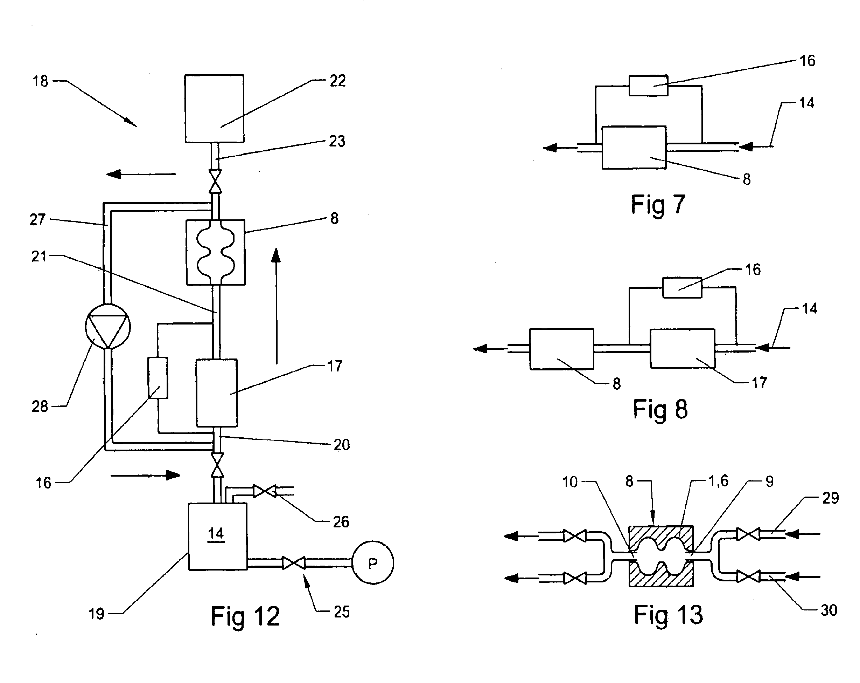

La résistivité électrique moyenne de cet alliage est relativement élevée, d'environ 70 µΩ.m. De ce fait, par circulation dans l'alliage d'un courant électrique issu d'un générateur 16, l'alliage peut être chauffé directement par effet Joule, soit à l'intérieur du moule 8 (voir figure 7) ou préalablement à son introduction dans le moule 8 dans un réservoir de chauffe 17 (voir figure 8). Ce chauffage direct est très aisé et peut être extrêmement rapide, augmentant encore la performance du procédé de moulage.

En outre, la température de fusion de cet alliage étant inférieure à la température de fusion de la matière thermoplastique (178°C dans l'exemple considéré), l'alliage 14 peut être liquide dans toute la gamme de température et de pression de travail et peut donc toujours circuler dans l'installation, en particulier pendant les phases de moulage et de démoulage.

La circulation de l'alliage dans le l'installation peut être assurée par divers moyens. En effet les températures atteintes, inférieures dans la plupart des cas à 300°C, et la faible viscosité de l'alliage permettent l'utilisation de pompes classiques à piston ou centrifuge. En outre la conductivité électrique permet d'envisager un pompage électromagnétique par force de Laplace. Enfin, un déplacement par pressurisation peut être utilisé, comme cela sera décrit plus loin.

Bien entendu, d'autres alliages peuvent être utilisés s'ils présentent des propriétés adaptées. On peut notamment utiliser des alliages dont la température de fusion est comprise entre 40 et 200°C, et qui peuvent facilement être évacués hors du moule.

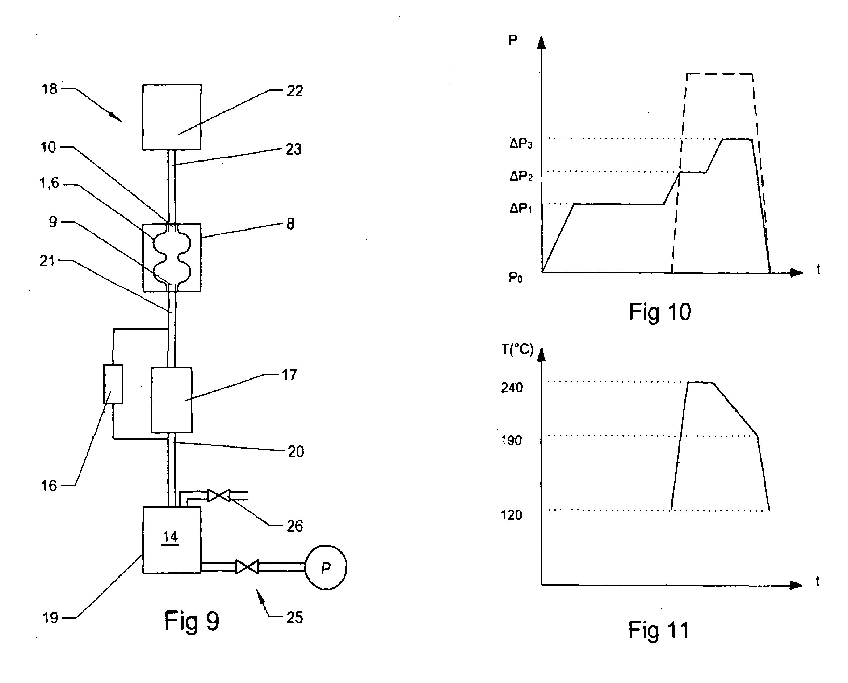

On se réfère à présent à la figure 9, qui représente une installation 18 pour la mise en oeuvre du procédé de moulage, ainsi qu'aux figures 10 et 11.

L'installation 18 comprend un réservoir de base 19 contenant l'alliage, un réservoir de chauffe 17 relié par une première conduite 20 au réservoir de base 19 et connecté à un générateur 16, le moule 8 dont l'orifice d'entrée 9 est relié par une deuxième conduite 21 au réservoir de chauffe 17, et un réservoir annexe 22 relié par une troisième conduite 23 à l'orifice de sortie 10 du moule 8.

Les réservoirs 19, 17, 22 et le moule 8 sont disposés verticalement les uns au-dessus des autres dans l'ordre précité, le réservoir de base 19 étant le plus bas. En outre, un dispositif de pressurisation est prévu pour augmenter ou diminuer la pression dans le réservoir de base 19 afin de provoquer le déplacement ascendant ou descendant de l'alliage 14 dans l'installation 18. Le dispositif de pressurisation comprend des moyens d'amenée de gaz sous pression 25 et une vanne 26 de mise à l'atmosphère, reliés au réservoir de base 19. Le gaz utilisé est par exemple de l'azote.

L'installation, et en particulier le moule 8, est maintenue à une température telle que l'alliage 14 soit liquide et puisse librement circuler sans risque de solidification, mais en dessous de la température de ramollissement du polyamide de la nappe 1, par exemple à 120°C. Le moule 8 conserve ainsi une température sensiblement constante et n'est pas l'élément qui permet de faire fondre le matériau à mouler puis de le refroidir. C'est donc l'alliage 14 qui joue le rôle d'élément chauffant puis refroidisseur (fluide caloporteur), et le moule n'intervient que par sa fonction géométrique : il ne constitue donc plus un frein à des cycles de transformation rapides.

La pression et la température en chacun des éléments (réservoirs, conduites et moule) de l'installation 18 peuvent être facilement ajustées aux valeurs souhaitées grâce à des résistances chauffantes et à un jeu de vannes et de manomètres reliées à un réseau de gaz sous pression.

L'ensemble nappe 1 - membrane 6 est disposé dans le moule 8 et raccordé de façon étanche aux conduites 21, 23. Initialement l'alliage 14 est intégralement situé dans le réservoir de base 19, et la pression dans ce réservoir est égale à la pression ambiante P0.

Le déplacement de l'alliage 14 entre les différents éléments est assuré par la pressurisation du réservoir de base 19 induisant une différence de pression entre le bas et le haut de l'installation 18. La forte densité de l'alliage conduit à une grande précision des transvasements réalisés.

Dans un premier temps, une différence de pression ΔP1 est appliquée, conduisant au déplacement d'une partie de l'alliage 14 vers le réservoir de chauffe 17, où l'alliage est porté à la température de moulage, supérieure à la température de fusion du polyamide, par exemple à 240°C. Puis une deuxième augmentation de la pression relative ΔP2 conduit le volume d'alliage surchauffé dans le moule 8. Lorsque l'alliage remplit l'intérieur du cylindre formé par la nappe 1 et la membrane 6, il cède au polyamide l'énergie nécessaire à sa fusion alors que conjointement la pression dans le moule 8 est portée à une valeur comprise entre 10 et 25 bar, permettant l'imprégnation des filaments de carbone par le polyamide fondu.

Après le temps nécessaire à cette opération, la pression relative dans le réservoir de base 19 est encore légèrement augmentée à une valeur ΔP3. L'alliage surchauffé est alors évacué du moule 8 vers le réservoir annexe 22, tandis qu'un volume d'alliage à 120°C est déplacé vers le haut dans le moule 8, assurant ainsi le refroidissement immédiat de la pièce 15 (le générateur 16 étant passé à l'état inactif une fois que le volume d'alliage nécessaire au remplissage du moule 8 a été chauffé).

Le réservoir de base 19 peut être alors remis à la pression ambiante P0 par action sur la vanne 26, ce qui conduit à la vidange de l'installation 18 par déplacement de l'alliage 14 vers le bas. Le moule 8 est alors ouvert et la pièce 15 obtenue est extraite.

L'homme du métier comprendra que les différentes valeurs données à la température et à la pression au cours du procédé de moulage sont fonction de la matière transformée et de l'alliage utilisé.

On se rapporte à présent à la figure 12. L'installation 18 qui y est représentée comprend, outre les éléments décrits en référence à la figure 9, une quatrième conduite 27. Celle-ci est connectée d'une part à l'orifice de sortie 10 du moule 8 et d'autre part à l'entrée du réservoir de chauffe 17. Ainsi, en isolant le moule 8 et le réservoir de chauffe 17 une fois ceux-ci remplis, on peut, grâce à une pompe 28, faire circuler l'alliage en boucle de la sortie vers l'entrée du moule, dans ces deux éléments, sous la pression nécessaire à l'imprégnation des fibres par la matière thermoplastique. On réalise ainsi un apport continu de chaleur au moule, qui rend le procédé plus performant, et permet en outre le moulage de pièces de grandes dimensions pour lesquelles le chauffage obtenu avec l'alliage statique dans le moule est insuffisant.

En variante (figure 13) sont prévus deux circuits distincts de circulation de l'alliage 14, à savoir un premier circuit 29 dans lequel circule l'alliage porté à la température de moulage (ici 240°C), et un deuxième circuit 30 dans lequel circule l'alliage présentant la température générale de l'installation 18 (ici 120°C), température permettant le refroidissement de la pièce 15 avant son démoulage. Un jeu de vannes permet de sélectionner le circuit actif selon l'étape du procédé (moulage / démoulage), c'est-à-dire la température de l'alliage pénétrant dans le moule 8.

Ainsi, l'invention apporte une amélioration déterminante à la technique antérieure, en fournissant un procédé et une installation de moulage particulièrement performants en terme de temps de cycles et d'énergie nécessaire.

Il va de soi que l'invention n'est pas limitée à la forme de réalisation décrite ci-dessus à titre d'exemple mais qu'elle en embrasse au contraire toutes les variantes de réalisation.

Ainsi, bien que l'invention soit particulièrement avantageuse dans le cas de pièces creuses en matériau composite dont la matrice est thermoplastique, elle peut également s'appliquer aux composites à matrice thermodurcissable, aux matériaux polymères non composites (dépourvus de fibres) thermoplastiques ou thermodurcissables, aux pièces non creuses (nappes initialement planes).

## Revendications

1. Procédé de moulage d'une pièce (15) en matériau moulable à chaud, comprenant les étapes consistant à :
- prévoir une nappe (1) de matériau moulable à chaud ;
- prévoir un premier alliage métallique (14) dont la température de fusion est inférieure à la température de transformation du matériau moulable ;
- associer contre une face de la nappe (1) une membrane (6) en une matière imperméable au premier alliage métallique, peu isolante thermiquement et qui, à la température de moulage, est déformable mais résistante ;
- placer l'ensemble nappe (1) - membrane (6) dans la cavité (7) d'un moule (8) comprenant au moins un orifice d'entrée (9), un orifice de sortie (10) et une empreinte (11), le matériau moulable étant disposé en regard de l'empreinte (11) ;
**caractérisé en ce qu'**il comprend en outre les étapes consistant à:
- introduire le premier alliage métallique (14) sous forme liquide dans le moule (8) par l'orifice d'entrée (9), dans la partie de la cavité (7) du moule (8) située du même côté de la nappe (1) que la membrane (6), ledit premier alliage étant porté, dans le moule ou préalablement à son introduction dans le moule, à une température de moulage supérieure à la température de transformation du matériau moulable, et à une pression adaptée, de sorte que l'ensemble nappe (1) - membrane (6) prenne une forme complémentaire de l'empreinte (11) par suite de son placage contre ladite empreinte et de la transformation et de la déformation du matériau moulable sous l'effet du premier alliage métallique (14) ;
- évacuer le premier alliage métallique (14) sous forme liquide hors du moule (8) par l'orifice de sortie (10) ; et
- démouler la pièce (15) obtenue.

2. Procédé selon la revendication 1, **caractérisé en ce qu'**il comprend en outre, après que l'ensemble nappe (1) - membrane (6) a pris une forme complémentaire de l'empreinte (11) et avant le démoulage de la pièce (15), les étapes consistant à :
- prévoir un deuxième alliage métallique (14) dont la température de fusion est inférieure à la température de transformation du matériau moulable ;
- introduire le deuxième alliage métallique (14) sous forme liquide dans le moule (8) par un orifice d'entrée (9), dans la partie de la cavité (7) du moule (8) située du même côté de la nappe (1) que la membrane (6), ledit deuxième alliage étant porté à une température de démoulage comprise entre la température de fusion du deuxième alliage et la température de transformation du matériau moulable, et à une pression adaptée, de sorte à permettre le refroidissement et, le cas échéant, la solidification de l'ensemble nappe (1) - membrane (6) ; et
- évacuer le deuxième alliage métallique (14) sous forme liquide hors du moule (8) par un orifice de sortie (10).

3. Procédé selon la revendication 1 ou 2, **caractérisé en ce que** le moule (8) est maintenu à une température sensiblement constante comprise entre la température de fusion du premier et/ou du deuxième alliage métallique (14) et la température de transformation du matériau moulable.

4. Procédé selon l'une des revendications 1 à 3, **caractérisé en ce que** le premier et/ou le deuxième alliage métallique comprend au moins l'un des composés suivants : plomb, étain, bismuth, cadmium.

5. Procédé selon l'une des revendications 1 à 4, **caractérisé en ce que** le premier et/ou le deuxième alliage métallique est un mélange ternaire de plomb, étain et bismuth dont la température de fusion est comprise entre 85 et 105°C.

6. Procédé selon l'une des revendications 1 à 5, **caractérisé en ce que** le premier et le deuxième alliages métalliques (14) présentent des compositions identiques.

7. Procédé selon l'une des revendications 1 à 6, **caractérisé en ce que** la membrane (6) est réalisée en un matériau élastomère, tel qu'un élastomère de silicone, ou en un polyamide.

8. Procédé selon l'une des revendications 1 à 7, **caractérisé en ce que** la membrane (6) présente une épaisseur comprise entre 10 µm et 1 mm.

9. Procédé selon l'une des revendications 1 à 8, **caractérisé en ce que**, une fois la pièce (15) obtenue démoulée, on détache la membrane (6) de la nappe (1).

10. Procédé selon l'une des revendications 1 à 9, **caractérisé en ce que** le matériau moulable est un matériau composite comprenant une matrice en matériau thermoplastique (2) et des fibres de renfort (3).

11. Procédé selon l'une des revendications 1 à 10, **caractérisé en ce que** la nappe forme un élément creux tel qu'un tube ou une enveloppe fermée, muni d'au moins une ouverture pour l'introduction et l'évacuation d'alliage métallique liquide (14), la membrane (6) étant disposée à l'intérieur dudit élément creux.

12. Installation pour la mise en oeuvre du procédé selon l'une des revendications 1 à 11, **caractérisée en ce qu'**elle comprend :
- un réservoir de base (19) contenant, sous forme liquide, un alliage métallique (14) dont la température de fusion est inférieure à la température de transformation du matériau moulable ;
- un moule (8) dont l'orifice d'entrée (9) est relié par une conduite (20, 21) au réservoir de base (19) ;
- des moyens de chauffage (16, 17) de l'alliage métallique (14) situés en amont du moule (8) ou au niveau du moule (8) ;
- des moyens de déplacement (25, 26) de l'alliage aptes à permettre l'introduction de l'alliage dans le moule (8) et son évacuation hors du moule (8).

13. Installation selon la revendication 12, **caractérisée en ce que** les moyens de chauffage (16, 17) de l'alliage métallique (14) peuvent être dans un état actif, dans lequel l'alliage métallique (14) liquide présent dans le moule (8) est porté à la température de moulage, ou dans un état inactif, dans lequel l'alliage métallique (14) liquide présent dans le moule (8) n'est pas chauffé et permet le refroidissement de l'ensemble nappe (1) - membrane (6).

14. Installation selon la revendication 12 ou 13, **caractérisée en ce que** le moule (8) est situé au-dessus du réservoir de base (19), **en ce que** l'orifice de sortie (10) du moule (8) est relié par une conduite (23) à un réservoir annexe (22) situé au-dessus du moule (8), et **en ce que** les moyens de déplacement de l'alliage comprennent un dispositif de pressurisation (25) apte à augmenter ou diminuer la pression dans le réservoir de base (19) de sorte à provoquer le déplacement ascendant ou descendant de l'alliage métallique liquide dans l'installation (18).

15. Installation selon l'une des revendications 12 à 14, **caractérisée en ce que** les moyens de chauffage comprennent un réservoir de chauffe (17), situé entre le réservoir de base (19) et le moule (8), et un générateur électrique (16) apte à chauffer l'alliage métallique (14) par effet Joule.

16. Installation selon l'une des revendications 12 à 15, **caractérisée en ce qu'**elle comprend en outre des moyens (27, 28) aptes à provoquer une circulation en boucle de l'alliage métallique (14) de la sortie (10) vers l'entrée (9) du moule (8).

## Claims

1. A method for molding a part (15) from a hot-forming material, comprising the steps of:
- providing a layer (1) of hot-forming material;
- providing a first metal alloy (14), the melting temperature of which is lower than the transformation temperature of the forming material;
- at one face of the layer (1), associating a membrane (6) of a material impervious to the first metal alloy, with low heat insulation, and which, at the molding temperature, is plastic, but durable;
- placing the layer (1)/ membrane (6) assembly inside the cavity (7) of a mold (8) comprising at least one inlet orifice (9), one outlet orifice (10), and a die (11), the forming material being arranged opposite the die (11);
**characterized in that** it further comprises the steps of:
- introducing the first metal alloy (14) as a liquid into the mold (8) through the inlet orifice (9), into the part of the cavity (7) of the mold (8) situated on the same side of the layer (1) as the membrane (6), said first alloy, inside the mold or prior to being introduced into the mold, being brought to a molding temperature which is higher than the transformation temperature of the forming material, and to adequate pressure, so that the layer (1)/ membrane (6) assembly adopts a shape which is complementary to the die (11) due to the application thereof against said die and transformation and deformation of the forming material under the effect of the first metal alloy (14);
- discharging the first metal alloy (14) as a liquid from the mold (8) through the outlet orifice (10); and
- stripping the part (15) obtained.

2. The method according to claim 1, **characterized in that** it further comprises, after the layer (1)/ membrane (6) assembly has adopted a shape complementary to the die (11) and before stripping of the part (15), the steps of:
- providing a second metal alloy (14) the melting temperature of which is lower than the transformation temperature of the forming material;
- introducing the second metal alloy (14) as a liquid into the mold (8) through an inlet orifice (9), into the part of the cavity (7) of the mold (8) situated on the same side of the layer (1) as the membrane (6), said second alloy being brought to a stripping temperature comprised between the melting temperature of the second alloy and the transformation temperature of the forming material, and to adequate pressure, so as to allow for cooling and possibly solidification of the layer (1)/ membrane (6) assembly; and
- discharging the second metal alloy (14) as a liquid out of the mold (8) through an output orifice (10).

3. The method according to claim 1 or 2, **characterized in that** the mold (8) is maintained at a substantially constant temperature comprised between the melting temperature of the first and/or the second metal alloy (14) and the transformation temperature of the forming material.

4. The method according to any of claims 1 to 3, **characterized in that** the first and/or second metal alloy comprises at least one of the following components: lead, tin, bismuth, cadmium.

5. The method according to any of claims 1 to 4, **characterized in that** the first and/or the second metal alloy is a ternary mix of lead, tin, and bismuth, the melting temperature of which is comprised between 85 and 105 °C.

6. The method according to any of claims 1 to 5, **characterized in that** the first and the second metal alloys (14) have identical compositions.

7. The method according any of claims 1 to 6, **characterized in that** the membrane (6) is made of an elastomeric material, such as a silicone elastomer, or from a polyamide.

8. The method according to any of claims 1 to 7, **characterized in that** the membrane (6) has a thickness comprised between 10 µm and 1 mm.

9. The method according to any of claims 1 to 8, **characterized in that**, once the part (15) obtained has been stripped, the membrane (6) is peeled off the layer (1).

10. The method according to any of claims 1 to 9, **characterized in that** the forming material is a composite material comprising a matrix of thermoplastic material (2) and reinforcing fibers (3).

11. The method according to any of claims 1 to 10, **characterized in that** the layer is a hollow element such as a tube or a closed envelope, provided with at least one opening for introducing and discharging a liquid metal alloy (14), with the membrane (6) being arranged inside said hollow element.

12. An installation for implementing the method according any of claims 1 to 11, **characterized in that** it comprises:
- a main storage container (19) containing in liquid form a metal alloy (14) the melting temperature of which is lower than the transformation temperature of the forming material;
- a mold (8) the input orifice (9) of which is connected by a duct (20, 21) to the main storage container (19);
- means (16, 17) for heating the metal alloy (14) situated upstream of the mold (8) or at the mold (8);
- means (25, 26) for displacing the alloy, adapted for allowing for the alloy to be introduced into the mold (8) and discharged thereof outside the mold (8).

13. The installation according to claim 12, **characterized in that** the means (16, 17) for heating the metal alloy (14) can be in an active state, in which the liquid metal alloy (14) present inside the mold (8) is brought to the molding temperature, or in an inactive state, in which the liquid metal alloy (14) present inside the mold (8) is not heated and allows for cooling of the layer (1)/membrane (6) assembly.

14. The installation according to claim 12 or 13, **characterized in that** the mold (8) is located above the main storage container (19), **in that** the outlet orifice (10) of the mold (8) is connected by a duct (23) to an auxiliary storage container (22) located above the mold (8), and **in that** the means for displacing the alloy comprise a pressurization device (25) adapted for increasing or reducing pressure inside the main storage container (19) so as to cause the up or down displacement of the liquid metal alloy inside the installation (18).

15. The installation according to any of claims 12 to 14, **characterized in that** the heating means comprise a heating storage container (17) located between the main storage container (19) and the mold (8), and an electric generator (16) adapted for heating the metal alloy (14) by Joule effect.

16. The installation according to any of claims 12 to 15, **characterized in that** it further comprises means (27, 28) adapted for causing closed loop circulation of the metal alloy (14) from the outlet (10) to the inlet (9) of the mold (8).

## Patentansprüche

1. Verfahren zum Formen eines Teils (15) aus einem spritzgießfähigen Material, umfassend folgende Schritte:
- Bereitstellen ein Lage (1) aus spritzgießfähigem Material;
- Bereitstellen einer ersten Metalllegierung (14), deren Schmelztemperatur niedriger als die Umwandlungstemperatur des spritzfähigen Materials ist;
- an einer Seite der Lage (1) Verknüpfen einer Membrane (6) aus einem Material, das für die erste Metalllegierung undurchlässig ist, wenig wärmeisolierend ist, und das bei der Formtemperatur verformbar aber widerstandsfähig ist;
- Legen der Anordnung aus Lage (1)/ Membrane (6) in den Hohlraum (7) einer Form (8), die mindestens eine Einlassöffnung (9), eine Auslassöffnung (10) und eine Formhöhlung (11) umfasst, wobei das spritzfähige Material der Formhöhlung (11) gegenüber angeordnet ist;
**dadurch gekennzeichnet, dass** es ferner folgende Schritte umfasst:
- Einführen der ersten Metalllegierung (14) in flüssiger Form in die Form (8) durch die Einlassöffnung (9) in den Teil des Hohlraums (7) der Form (8), der sich auf der gleichen Seite der Lage (1) befindet wie die Membrane (6), wobei die erste Legierung in der Form oder vor ihrer Einführung in die Form auf eine Formtemperatur gebracht wird, die höher ist als die Umwandlungstemperatur des spritzfähigen Materials, und auf einen geeigneten Druck, so dass die Anordnung aus Lage (1)/ Membrane (6) eine Gestalt annimmt, die durch Andrücken an die Formhöhlung und Umwandlung und Verformung des spritzfähigen Materials unter der Einwirkung der ersten Metalllegierung (14) die Formhöhlung (11) ergänzt;
- Ablassen der ersten Metalllegierung (14) in flüssiger Form aus der Form (8) durch die Auslassöffnung (10) hindurch; und
- Ausformen des erzielten Teils (15).

2. Verfahren nach Anspruch 1, **dadurch gekennzeichnet, dass** es, nachdem die Anordnung aus Lage (1)/ Membrane (6) eine die Formhöhlung (11) ergänzende Gestalt angenommen hat, und vor dem Ausformen des Teils (15) ferner folgende Schritte umfasst:
- Bereitstellen einer zweiten Metalllegierung (14), deren Schmelztemperatur niedriger ist als die Umwandlungstemperatur des spritzfähigen Materials;
- Einführen der zweiten Metalllegierung (14) in flüssiger Form in die Form (8) durch eine Einlassöffnung (9) in den Teil des Hohlraums (7) der Form (8), der sich auf der gleichen Seite der Lage (1) befindet wie die Membrane (6), wobei die zweite Legierung auf eine Ausformtemperatur gebracht wird, die zwischen der Schmelztemperatur der zweiten Legierung und der Umwandlungstemperatur des spritzfähigen Materials liegt, und auf einen geeigneten Druck, um ein Abkühlen und eventuelles Erstarren der Anordnung aus Lage (1)/ Membrane (6) zu ermöglichen; und
- Ablassen der zweiten Metalllegierung (14) in flüssiger Form aus der Form (8) durch eine Auslassöffnung (10) hindurch.

3. Verfahren nach Anspruch 1 oder 2, **dadurch gekennzeichnet, dass** die Form (8) auf einer im Wesentlichen konstanten Temperatur gehalten wird, die zwischen der Schmelztemperatur der ersten und/oder der zweiten Metalllegierung (14) und der Umwandlungstemperatur des spritzfähigen Materials liegt.

4. Verfahren nach einem der Ansprüche 1 bis 3, **dadurch gekennzeichnet, dass** die erste und/oder zweite Metalllegierung mindestens einen der folgenden Bestandteile umfasst: Blei, Zinn, Wismut, Kadmium.

5. Verfahren nach einem der Ansprüche 1 bis 4, **dadurch gekennzeichnet, dass** die erste und/oder die zweite Metalllegierung eine ternäre Mischung aus Blei, Zinn und Wismut ist, deren Schmelztemperatur zwischen 85 und 105 °C liegt.

6. Verfahren nach einem der Ansprüche 1 bis 5, **dadurch gekennzeichnet, dass** die erste und die zweite Metalllegierung (14) identische Zusammensetzungen aufweisen.

7. Verfahren nach einem der Ansprüche 1 bis 6, **dadurch gekennzeichnet, dass** die Membrane (6) aus einem Elastomermaterial besteht, wie etwa einem Silikonelastomer, oder aus einem Polyamid.

8. Verfahren nach einem der Ansprüche 1 bis 7, **dadurch gekennzeichnet, dass** die Membrane (6) eine Dicke aufweist, die zwischen 10 µm und 1 mm liegt.

9. Verfahren nach einem der Ansprüche 1 bis 8, **dadurch gekennzeichnet, dass** sobald das erzielte Teil (15) ausgeformt wurde, die Membrane (6) von der Lage (1) abgezogen wird.

10. Verfahren nach einem der Ansprüche 1 bis 9, **dadurch gekennzeichnet, dass** das spritzfähige Material ein Verbundmaterial ist, das ein Grundmaterial aus Thermoplast (2) und Verstärkerfasern (3) umfasst.

11. Verfahren nach einem der Ansprüche 1 bis 10, **dadurch gekennzeichnet, dass** die Lage ein Hohlelement, wie etwa eine Röhre oder eine geschlossene Hülle, bildet, das mit mindestens einer Öffnung zum Einführen oder Ablassen von flüssiger Metalllegierung (14) versehen ist, wobei die Membrane (6) im Innern des Hohlelements angeordnet ist.

12. Anlage zum Umsetzen des Verfahrens nach einem der Ansprüche 1 bis 11, **dadurch gekennzeichnet, dass** es Folgendes umfasst:
- ein Hauptreservoir (19), das in flüssiger Form eine Metalllegierung (14) enthält, deren Schmelztemperatur niedriger ist als die Umwandlungstemperatur des spritzfähigen Materials;
- eine Form (8), deren Einlassöffnung (9) über ein Rohr (20, 21) mit dem Hauptreservoir (19) verbunden ist;
- Mittel (16, 17) zum Erhitzen der Metalllegierung (14), die sich oberhalb der Form (8) oder an der Form (8) befinden;
- Mittel (25, 26) zum Bewegen der Legierung, die dazu geeignet sind, um das Einführen der Legierung in die Form (8) und ihr Ablassen aus der Form (8) zu ermöglichen.

13. Anlage nach Anspruch 12, **dadurch gekennzeichnet, dass** die Mittel (16, 17) zum Erhitzen der Metalllegierung (14) sich in einem aktiven Zustand befinden können, in dem die flüssige Metalllegierung (14), die in der Form (8) vorliegt, auf die Formtemperatur gebracht wird, oder sich in einem inaktiven Zustand befinden können, in dem die flüssige Metalllegierung (14), die in der Form (8) vorliegt, nicht erhitzt wird und das Abkühlen der Anordnung aus Lage (1)/ Membrane (6) ermöglicht.

14. Anlage nach Anspruch 12 oder 13, **dadurch gekennzeichnet, dass** die Form (8) sich über dem Hauptreservoir (19) befindet, dass die Auslassöffnung (10) der Form (8) über ein Rohr (23) mit ein Nebenreservoir (22) verbunden ist, das sich über der Form (8) befindet, und dass die Mittel zum Bewegen der Legierung eine Vorrichtung (25) zur Druckbeaufschlagung umfassen, die in der Lage ist, den Druck in dem Hauptreservoir (19) derart zu erhöhen oder zu erniedrigen, dass die Auf- und Abbewegung der flüssigen Metalllegierung in der Anlage (18) hervorgerufen wird.

15. Anlage nach einem der Ansprüche 12 bis 14, **dadurch gekennzeichnet, dass** die Heizmittel ein Heizreservoir (17), das sich zwischen dem Hauptreservoir (19) und der Form (8) befindet, und einen elektrischen Generator (16), der dazu geeignet ist, die Metalllegierung (14) durch den Joule-Effekt zu erhitzen, umfassen.

16. Anlage nach einem der Ansprüche 12 bis 15, **dadurch gekennzeichnet, dass** sie ferner Mittel (27, 28) umfasst, die dazu geeignet sind, um einen Umlauf der Metalllegierung (14) in einer Schleife vom Auslass (10) zum Einlass (9) der Form (8) zu ermöglichen.
